# EUROPEAN PATENT SPECIFICATION

(11) **EP 1 509 713 B1**
(45) Date of publication and mention of the grant of the patent: **30.01.2008**
(21) Application number: 03722321.1
(22) Date of filing: 21.05.2003
(51) Int. Cl.: F16K 7/10, A63B 41/02, A63H 27/10, B29C 41/14, B29C 41/22, B29C 41/20

(54) **AN INFLATABLE, FLEXIBLE DEVICE FOR USE AS AN EXPANDABLE CLOSURE DEVICE, AND A METHOD OF PRODUCING SAID DEVICE**
AUFBLASBARE UND FLEXIBLE VORRICHTUNG ZUR VERWENDUNG ALS AUSDEHNBARES ABSPERRORGAN UND HERSTELLUNGSVERFAHREN
DISPOSITIF SOUPLE ET GONFLABLE UTILISE COMME DISPOSITIF DE FERMETURE DEPLOYABLE ET PROCEDE DE PRODUCTION DE CE DISPOSITIF

(30) Priority: 21.05.2002 EP 02011175
(43) Date of publication of application: 02.03.2005
(73) Proprietor: Saxenfelt Production ApS, 4700 Naestved (DK)
(72) Inventor: Saxenfelt, Keld, 4700 Naestved (DK)
(74) Representative: Nielsen, Henrik Sten
(86) International application number: PCT/DK2003/000336
(87) International publication number: WO 2003/098082

(56) References cited:
- EP-A- 0 543 458
- WO-A-94/23787
- FR-A- 1 109 301
- US-A- 2 330 400
- US-A- 4 501 545
- US-A- 4 565 222
- US-A- 5 170 986

## Description

The present invention relates to a method of producing an inflatable, flexible device for use as an expandable closure device, and to such a device produced in accordance with this method.

In numerous applications, a rubber body such as a hose or a tube is used for filling out a cavity within a body or used as a closure body in a valve construction. An example of this particular field is described in published international patent application WO 01/11283 corresponding to European patent EP 1198683. In this published international patent application a technique of closing off a pipe is described, according to which technique a bore is produced in the wall of the pipe as a branching off pipe is fixated to the pipe and the bore is produced in a drilling operation through the branching off pipe in which a bore valve is included. After the production of the through going bore of the major pipe, the tool for the production of the bore is removed, and an expandable rubber hose is introduced through the bore.

The implementation of this technique, however, has proven that a conventional rubber hose is not able to be introduced through the bore for the reason that the conventional rubber hose being a homogeneous spherical rubber hose having an inlet tube cannot be collapsed for allowing the material of the spherical rubber hose to be introduced through the bore produced in the wall of the pipe. In this application, this spherical rubber hose must fulfil two contradictory conditions, viz. on the one hand a requirement of sufficient rubber hose thickness, in particular in case the rubber wall is made from a fibre or mesh reinforced rubber material, and on the other hand the requirement of allowing the spherical rubber hose to be introduced through the bore in a non-expanded state.

In numerous other applications of inflatable tubes or hoses, similar contradictory requirements exist, necessitating the production of an expandable hose or tube allowing the fulfilment of these two contradictory requirements.

Examples of inflatable flexible devices are e.g. described in FR 1 109 301, EP 0 543 458, 0 583 819 A1, US patent 3,714,951, US patent 4,565,222, and US patent 5,901,752.

An object of the present invention as disclosed in claims 1 and 2 is to provide an inflatable, flexible device for use as an expandable closure device allowing the device to be expanded from an unexpanded state in which the outer dimension of the hose or tube is radically reduced such as reduced by 30%-70% compared to the outer dimension of the inflatable, flexible device in expanded state. In this context, it is to be realised that the present invention relates to spherical closure hoses.

A feature of the present invention relates to the fact that the inflatable, flexible device which constitutes a fibre or mesh reinforced inflatable, flexible device may be produced in a collapsed state in which the requirements as to special requirements of production of the device according to the present invention is reduced by at least a factor 2 as compared to conventional, inflatable and flexible device having a smooth outer surface.

A feature of the present invention relates to the fact that the inflatable, flexible device according to the present invention may based on its intentional regular outer configuration be configurated in a specific unexpanded state reducing the overall outer dimension of the device in its uninflated state as compared to a conventional expandable device.

The above object, the above advantages and the above features together with numerous other objects, advantages and features would be evident from the below detailed description of the presently preferred embodiments of the inflatable, flexible closure device according to the present invention are obtained by an inflatable, flexible device for use as an expandable device, comprising:
an inlet part of a substantially tubular configuration,
an expandable bag part integrally connected to the inlet part and made form a highly flexible and highly elastic material such as natural rubber, synthetic rubber, plastics, polymer or elastomer materials or combinations thereof, the expandable bag being changeable from an unexpanded state to an expanded state by inflating the bag through the introduction of an inflation gas into the interior through the inlet part, the expandable bag defining in the expandable state a sphere, the expandable bag including in its unexpanded state a plurality of inwardly bent folds extending parallel with the inlet part and extending from positions juxtaposed the inlet part along a major part of the outer surface of the expandable bag part, the inwardly bent folds reducing the overall diameter of the expandable device in the unexpanded state by at least 30%, preferably 40%, further preferably 50%, further preferably 60% or 70%, such as 30%-35%, 35%-40%, 40%-45%, 45%-50%, 50%-55%, 55%-60%, 60%-65%, 65%-70%, as compared to the geometrical configuration defined by the expandable bag in the non-expanded state and not including the plurality of inwardly bent folds, and the inlet part and the expandable bag part of the inflatable, flexible device are made from one and the same material, preferably natural rubber and further made in one and the same production process.

According the teaching characteristics of the present invention, the inflatable, flexible device according to the present invention is in its unexpanded state collapsed into a dimensionally reduced configuration through the provision of the inwardly bent folds. The inwardly bent folds surprisingly provide a smooth outer surface of the expandable bag part in its expanded state in spite of the irregular configuration of the expandable bag part in its unexpanded state.

The number of folds providing the dimensional reduction of the expandable bag part in its unexpanded state as compared to its expanded state may vary from application to application. According to the presently preferred embodiments of the inflatable, flexible device according to the present invention, the inflatable, flexible device according to the present invention, said plurality of inwardly bent folds comprising 4-24 folds such as 6-18 folds, preferably 12 folds, or 4-6, 6-8, 8-10, 10-12, 12-14, 14-16, 16-18, 18-20, 20-22, 22-24 folds.

The inflatable, flexible device according to the present invention for use as an expandable closure device may be made from a homogeneous material such as rubber, preferably natural rubber or a similar highly flexible and elastic material. The high elasticity of the material, in particular natural rubber, allows the expandable bag part when converted from the unexpanded state to the expanded state to be highly deformed and provided an excessive pressure be applied to the interior of the expandable bag part may cause the expandable bag part to blow. For preventing any excessive deformation and a possible deterioration of the expandable bag part due to the presence of a high gas pressure state within the inner chamber of the expandable bag part, the expandable bag part is according to the embodiment of the inflatable, flexible device according to the present invention provided with an interior reinforcing structure which is implemented as a fibre or mesh reinforcing structure serving the main purpose of preventing the expandable bag part from being expanded beyond a specific maximum size determined by the reinforcing structure. Consequently, by the provision of the reinforcing structure, the inflatable, flexible device on the one hand may not be expanded beyond a specific limit or size preventing the inflatable, flexible device from being highly deformed in the expanded state and on the other hand increases the maximum pressure limit by allowing the inner pressure of the expandable bag part to be highly increased due to the presence of the reinforcing structure without any substantial risk of having the expandable bag blown apart due to the presence of an excessive inner pressure or in the alternative an extreme deformation causing a tearing or otherwise ruining of the wall of the expandable bag part. The integral reinforcing structure may, as will be described below, be integrally cast into the wall of the expandable bag part.

Alternatively or additionally, the inflatable, flexible device according to the present invention may be provided with an outer wear-resistant coating in addition to the integral reinforcing structure. The presence of the wear-resistant coating may serve the purpose of establishing specific mechanical wear-resistance properties or provided the inflatable, flexible device be exposed to certain aggressive constituents serve the purpose of preventing the aggressive constituents from deteriorating or ruining the material of the expandable bag part.

For obtaining the feature of allowing the expandable bag part to collapse in its unexpanded state, the inwardly bent folds may according to one embodiment of the inflatable, flexible device according to the present invention extend to the apex of the expandable bag part opposite to its inlet part. However, according to the presently preferred embodiment of the inflatable, flexible device according to the present invention an unfolded part is provided in the expandable bag part opposite to its integral connection to the inlet part for providing a generator for the unfolding of the inwardly bent folds into the smooth intentional configuration of the expandable bag part in its expanded state.

Dependent on the intentional application of the device according to the present invention, the inlet part may vary in length and width. The width of the inlet part needs to fulfil the requirements of providing adequate inlet capability for providing the expansion of the expandable bag part through the introduction of the inflation gas, which gas may be constituted by pressurised air or an inert gas or a substantial inert gas such as e.g. nitrogen. Provided a connection from the expandable bag part to the inflation gas source is needed, the inlet part may define a length substantially larger than the characteristic outer dimension of the expandable bag part or define a length substantially identical to the characteristic outer dimension of the expandable bag part or the length substantially smaller than the characteristic outer dimension of the expandable bag part.

The inflatable, flexible device is as stated above, made from a highly flexible and highly elastic material, preferably natural rubber.

The present invention also relates to a method of producing the device according to the present invention and in greater details, the method comprises the steps of:
i) providing a generator body having an outer configuration congruent to the configuration of the inflatable, flexible device when it is in its unexpanded state,
ii) applying a release-coating to the generator body,
iii) introducing the generator body having the outer release-coating into a latex bath and maintaining the generator body in the latex bath for a period of time of 1-20 min. such as 2-10 min.
iv) shifting the generator body having an outer latex coating into a latex binder bath,
v) repeating the step iii) and optionally further the step iv) and repeating step iii),
vi) vulcanizing the latex material by exposing the latex material to an elevated temperature for an extended period of time such as a temperature of 65°C for 2 hrs. and
vii) removing the vulcanized latex body from the generator body.
   The latex body is reinforced by the application of a reinforcing structure to the latex body, and the method according to the present invention further comprises the steps of
viii) introducing a gas into the latex body at an elevated gas pressure for converting the latex body from the unexpanded state to the expanded state,
ix) applying an outer reinforcing structure to the latex body when in the expanded state and fixating the reinforcing structure to the outer surface of the latex body and optionally
x) repeating the steps iv) and iii) two or more times and finally repeating the vulcanizing step vi).

The present invention is now to be further described with reference to the drawings, in which
Fig. 1 is an overall perspective and schematic view of a first and presently preferred embodiment of a pre-collapsed, inflatable and expandable device according to the present invention for use as a valve body in a closure valve of a pipe,
Fig. 2 is a cross-sectional view of the first and presently preferred embodiment of the pre-collapsed, inflatable and expandable device according to the present invention also shown in Fig. 1,
Figs. 3a and 3b are perspective, schematic and partly cutaway views of the intentional application of the first and presently preferred embodiment of the pre-collapsed, inflatable and expandable device according to the present invention shown in Fig. 1 and 2 illustrating two steps of introducing in the pre-collapsed state the device according to the present invention into the pipe as shown in Fig. 3a and the step of providing the closing of the pipe by inflating and expanding the device as shown in Fig. 3,
Figs. 4a and 4b are perspective, schematic and partly cutaway views of a different application of a pre-collapsed, inflatable and expandable device as a tube of a ball such as a football, which does not form part of the claimed invention,
Fig. 5a is a perspective, schematic and partly cutaway view of an alternative of the first and presently preferred embodiment of the pre-collapsed inflatable and expandable device according to the present invention also shown in Fig. 1 and disclosing an inner reinforcing fibre mesh structure,
Fig. 5b is a cross-sectional view similar to the view of Fig. 2, disclosing the inner reinforcing structure also shown in Fig. 5a,
Fig. 5c is a schematic and sectional view of a segment of the wall of the device shown in Fig. 5a in the expanded state, and
Fig. 5d is a view similar to the view of Fig. 5c of the wall of the expandable device shown in Fig. 5a in its non-expanded or pre-collapsed state.

The present invention relates in general to a technique of providing an inflatable and expandable rubber hose or tube having in its inflated and expanded state a general spherical configuration and including an inlet tube for allowing the introduction of an expansion gas such as pressurised atmospheric air or pressurised nitrogen constituting a substantial inert gas into the interior of the inflatable and expandable device which device is of a slim configuration as the device is produced in a pre-collapsed state and maintained in the pre-collapsed state until the inflation of the device is initiated allowing the inflatable and expandable device according to the present invention to be readily introduced into a narrow aperture, bore or hole of an apparatus or system etc. into which the device is to be introduced prior to the inflation and expansion of the device. A particular application of the device according to the present invention relates to the use according to the blocking technique published in international patent application WO 01/11283 corresponding to European patent application EP 1198683.

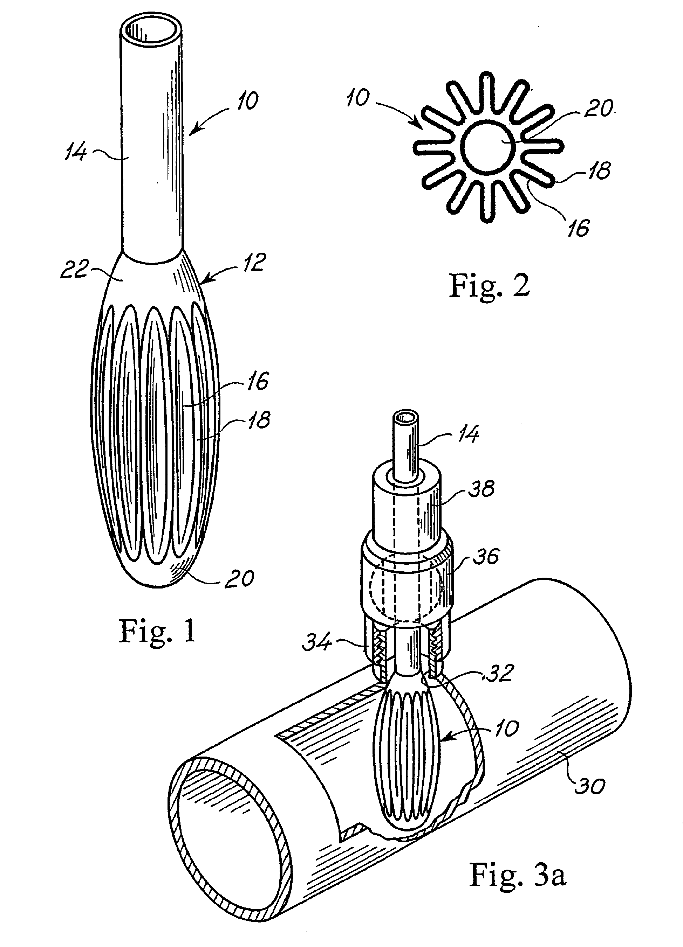

In Fig. 1, a first and presently preferred embodiment of the pre-collapsed, inflatable and expandable device according to the present invention is shown designated the reference numeral 10 in its entirety. The device 10 basically comprises two integrally produced parts, a pre-collapsed spherical part 12 and a tube like inlet part 14. The inlet part 14 is of a basically circular cylindrical configuration whereas the pre-collapsed spherical part 12 defines a configuration of a sphere the outer surface of which is collapsed or folded into a total of twelve inwardly bent folds folding the pre-collapsed spherical part into a slim configuration providing an overall transversal diameter of less than 50% of the diameter of the un-collapsed sphere, preferably less than 40%, further preferably less than 30% of the diameter of the un-collapsed sphere. One of the inwardly bent folds is designated the reference numeral 16 and between any two adjacent inwardly bent folds and outwardly extending ridge is defined one of which is defined the reference numeral 18. Opposite to the inlet part 14, the pre-collapsed spherical part 12 has a smooth and un-collapsed end section 20 and between the inlet part 14 and the inwardly bent folds 18 a smooth basically conical part 22 is provided.

In Fig. 2, a transversal sectional view of the device 10 is shown disclosing the inwardly bent folds 16, the ridges 18 and the inter surface of the smooth end section 20. As is evident from Fig. 2, the inwardly bent folds 16 extend to a position closely adjacent the inner boundary of the smooth end section 20, and each of the folds 16 defines an inward depth of more than 50% of the radius defined between any two opposed ridges 18. The depths defined by each of the inwardly bent folds 18 constitute in the embodiment shown in Fig. 2 approximately 55% of the radius defined by any two opposite ridges 18 or more than 27% of the overall diameter or width of the body defined by the pre-collapsed spherical part 12.

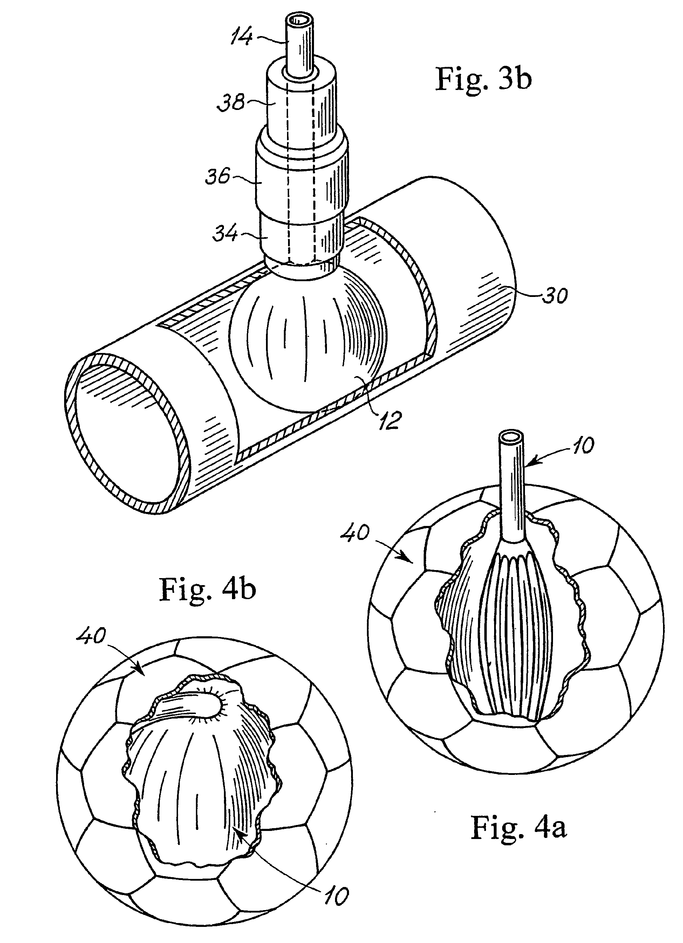

In Figs. 3a and 3b, the primarily intentional application of the pre-collapsed, inflatable and expandable device 10 according to the present invention is shown which application relates to the use of the device as an inflatable blocking device which is introduced into a pipe 30. In this context, reference is made to the above-mentioned published international patent application corresponding to the above-mentioned European patent application. In Fig. 3a, a pipe 30 is shown in which a small diameter aperture 32 is drilled as a pipe branch 34 is fixated to the pipe 30 and further connected to a shut-off bore valve 36 on the top of which an insertion cup 38 is mounted. As the shut-off valve 36 is opened as illustrated in Fig. 3a, the pre-collapsed spherical part 12 of the device 10 is moved from the insertion cup 38 in which the part 12 is initially concealed through the open shut-off valve 36 and further into the pipe 30. Thereupon, as illustrated in Fig. 3b, the pre-collapsed, inflatable and expandable device 10 is inflated and pressurised providing an expansion of the pre-collapsed spherical part 12 into the expanded and spherical configuration as is illustrated in Fig. 3b.

The pre-collapsed, inflatable and expandable device 10 according to the present invention is preferably made from natural rubber constituting the preferred flexible and elastically deformable material. The device 10 made be made from natural rubber in a multi-step rubber coating process in which a core body is initially used as a generator for the deposition of the natural rubber in the intentional configuration on the outer surface of the core body or generator. Additionally, reinforcing fibres or reinforcing webs are used in conjunction with natural rubber for primarily reinforcing the expandable pre-collapsed spherical part 12. Alternatively, high flexible and high elastic polymer or elastomer materials may be used for the pre-collapsed, inflatable and expandable device 10 according to the present invention.

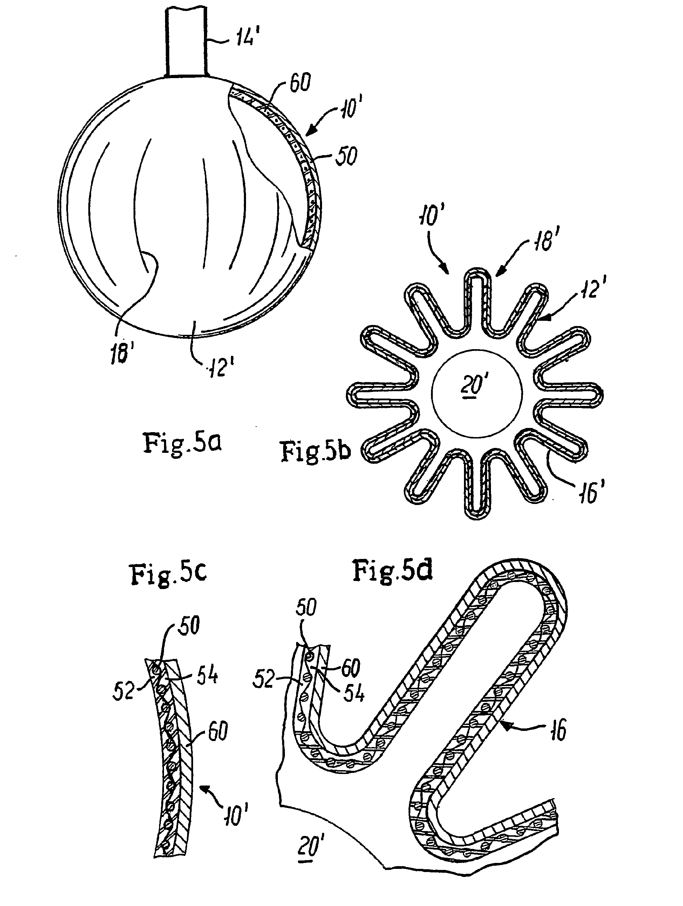

In Fig. 5a, a version of the embodiment of the pre-collapsed, inflatable and expandable device according to the present invention is shown. This version is designated by the reference numeral 10' in its entirety, and in the drawings, components or elements corresponding to and serving the same purpose as components or elements, respectively, described above with reference to Figs. 1, 2, 3a and 3b, are designated the same reference numeral, however added a marking for identifying the difference. It is shown that the spherical part 12' is reinforced by the provision of an interior reinforcing mesh or thread winding providing an reinforcing structure which further provides a specific maximum size of the expanded device 10' as the device is exposed to an inner gas pressure. The reinforcing structure may be provided in the spherical part 12' exclusively or may alternatively also be included in the inlet part 14. The provision of the reinforcing structure makes the step of expanding the device less critical in terms of the maximum allowable inner pressure as the reinforcing structure allows the highly flexible and elastic rubber bag to be exposed to an inner pressure far exceeding the inner pressure of a similar bag not including a reinforcing structure. The reinforcing structure also prevents when the inner gas pressure is generated the spherical part 12' from being deformed from the general spherical structure and thereby prevents any leakage to be generated along a deformed outer surface of the bag, thereby improving the sealing-off property of the device.

The reinforcing structure is shown in greater details in Figs. 5c and 5d as the reinforcing structure is constituted by thread or wires such as kevlar, fibre glass or carbon fibres or any other non-extendable fibre material compatible with the material of the spherical part 12. One of the threads or wires is designated the reference numeral 50, and as is illustrated in Figs. 5c and 5d, the thread or wire is sandwiched between two rubber layers 52 and 54, which are produced in separate steps and integrally joined together in the space defined between the thread or wire 50 and the adjacent wires.

The embodiment 10' differs from the above-described first embodiment 10 in that an outer wear-resistant coating 60 is provided which coating may be constituted by any relevant coating compatible with the material of the layers 52 and 54 which are preferably made from natural rubber and which reinforcing layer may serve as a mechanical wear-resistant layer or alternatively or additionally as a chemical barrier preventing any aggressive liquid from deteriorating the natural rubber material of the layers 52 and 54. Examples of wear-resistant materials are listed below.

In Fig. 5b, the reinforced and collapsed spherical part 12' is shown in a view similar to the view of Fig. 2, and in Fig. 5d, a detail of the outer surface of the collapsed spherical part 12' is shown illustrating in greater details the combination of the two natural rubber layers 52 and 54, and the outer wear-resistant coating 60.

The inflatable, flexible device according to the present invention is produced in a process as follows.

A generator body is provided, which generator body may be made from a metal material such as aluminium, stainless steel, iron or any other metal, or a solid plastics material or wood. The generator body is provided with and outer release coating produced from a latex binder including water, alcohol, natrium chloride, and a release material such as talcum powder.

The generator body with the coating is then introduced into a latex bath and allowed to stay there for a period of time allowing an 1 mm latex layer to deposit on the generator body. An appropriate deposit time depending on the temperature and viscosity of the latex is 2-10 min. Thereupon, the generator body having a single 1 mm latex layer applied on the outer surface of the generator body is introduced into a further latex binder composition identical to the above-described latex binder composition, however not including the release material. Finally, the generator body is introduced into the latex bath again for the same period of time for allowing a further 1 mm latex to deposit.

The 2 mm latex layer deposit on the generator body is then exposed to a vulcanizing process as the latex material is exposed to a heating for a period of time of approximately 2 hrs. at a temperature of 65°C. Dependant on the actual temperature of the vulcanizing process, the process may be extended or shortened by lowering or raising, respectively, the process temperature.

After the vulcanizing, the rubber or latex body is removed from the generator body and then caused to expand to its extensional size by the application of an inner pressure such as a pressure of 2 bar generated from a gas-pressure source. A reinforcing structure is then to be applied, the expanded state device is now provided with an outer fibre or mesh reinforcing structure which may be applied as a thread or wire winding as a pre-knitted mesh or simply randomly applied fibres possibly applied by an electrostatic application technique well know in the art as Flock^{®} application.

Provided a pre-knitted reinforcing structure is used, the structure is preferably precoated internally and optionally also externally with the latex binder before the application of the pre-knitted mesh structure to the rubber body including the spherical part and possibly also the tubular inlet part. The expanded rubber body having the thread, wire or mesh reinforcing structure applied to the outer surface is then input to the latex binder bath and thereupon in the same two-step latex application process as described above allowed to deposit two layers of 1 mm latex.

Finally, after this two-step latex application, the final product is vulcanized as described above. The above described process may for obvious reasons be modified in numerous ways, e.g. by the application of more than two latex layers by applying different numbers of latex layers with or without the reinforcing structure and may be further modified by an additional step involving the application of an outer wear-resistant coating. As alternatives to the natural rubber or latex material, silicone or any other highly flexible or elastic elastomer may be used.

The reinforcing fibre may advantageously be provided as kevlar fibres, e.g. kevlar 29 fibres having a break resistance of minimum 240 N providing a strength in the order of 1000-4000 N mm² or alternatively be provided as carbon fibre, polyester or any other polymer such as polyamide fibres. Further alternatively, zylon fibres may be used preferably as the outer wear-resistant coating as the zylon fibre material is highly wear-resistant and also resistant to most aggressive chemical constituencies.

A prototype version of the device 10' was produced as described above having an outer diameter in expanded state of the order of 20 cm and was tasted at a pressure of 30 bar which pressure was maintained for several days for proving the liability of the product.

The device according to the present invention may apart from the closure valve application shown in Figs. 3a and 3b be used in numerous alternative applications in which a slim hose or blocking body is to be introduced into the interior of a circumferentially encircling outer body element through a minor aperture or opening of the outer body. An example of application which does not form part of the present invention is shown in Fig. 4a and 4b in connection with a football as in Fig. 4a the unexpanded, pre-collapsed device 10 is introduced through a minor aperture at the top of a leather ball sphere, whereas in fig. 4b the device 10 is inflated, pressurised and expanded for providing an expansion of the rubber football into its intentional spherical configuration.

It is contemplated that the collapsing aspect of the invention relating to the provision of a slim inflatable body which may be introduced into a minor aperture may also be used for improving the production of spherical configurated flexible bodies or elements as the configuration of the spherical part 12 of the device 10 in the collapsed state produces the overall width or dimension of the device 10 as compared to a non-collapsed sphere. Therefore, in a plant for the production of expandable spheres, the pre-collapsing technique as deduced by the present invention may provide advantages as to the utilisation of the production plant since the number of products which may be produced within a specific area be limited by the outer boundaries of the coating bath in which the spherical products are produced may be increased by a factor of at least 4 provided the products be produced in a collapsed spherical state rather than in the un-collapsed spherical configuration.

Although the present invention has been described above with reference to a presently preferred embodiment of the device according to the present invention, a person having ordinary skill within the art may based on the above teaching deduce differently configurated embodiments and alternatives and such differently configurated embodiments or alternatives which are readily perceivable or deducible by a person having ordinary skill within the art is therefore to be considered part of the present invention as defined in the appending patent claims.

## Claims

1. A method of producing an inflatable, flexible device (10, 10') for use as an expandable closure device, the device comprising:
an inlet part (14, 14') of a substantially tubular configuration,
an expandable bag part (12, 12') integrally connected to said inlet part (14, 14') and made from a highly flexible and highly elastic material such as natural rubber, synthetic rubber, plastics, polymer or elastomer materials or combinations thereof, said expandable bag part (12, 12') being changeable from an unexpanded state to an expanded state by inflating said bag through the introduction of an inflation gas into the interior through said inlet part (14, 14'), said expandable bag part (12,12') defining in said expanded state a sphere, said expandable bag part (12, 12') including in its unexpanded state a plurality of inwardly bent folds (16, 16') extending parallel with said inlet part (14, 14') and extending from positions juxtaposed said inlet part (14, 14') along a major part of the outer surface of said expandable bag part (12, 12'), said inwardly bent folds (16, 16') reducing the overall diameter of said expandable device in said unexpanded state by at least 30%, preferably 40%, further preferably 50%, further preferably 60% or 70%, such as 30%-35%, 35%-40%, 40%-45%, 45%- 50%, 50%-55%, 55%-60%, 60%-65%,65%-70%, as compared to the geometrical configuration defined by said expandable bag part (12, 12') when in said non-expanded state and when not including said plurality of inwardly bent folds (16, 16'), and said inlet part (14, 14') and said expandable bag part (12, 12') being made from identical materials and in a single production step,
the method comprising the steps of:
i) providing a generator body having an outer configuration congruent to the configuration of the inflatable, flexible device (10, 10') when it is in its unexpanded state,
ii) applying a release-coating to said generator body,
iii) introducing said generator body having said outer release-coating into a latex bath and maintaining said generator body in said latex bath for a period of time of 1-20 min. such as 2-10 min.
iv) shifting said generator body having an outer latex coating into a latex binder bath,
v) repeating said step iii) and optionally further said step iv) and repeating step iii),
vi) vulcanizing said latex material by exposing said latex material to an elevated temperature for an extended period of time such as a temperature of 65 C for 2 hrs,
vii) removing said vulcanized latex body from said generator body,
viii) introducing a gas into said latex body at an elevated gas pressure for converting said latex body from said unexpanded state to said expanded state,
ix) applying an outer fiber or mesh reinforcing structure to said latex body when in said expanded state and fixing said reinforcing structure to the outer surface of said latex body and optionally
x) repeating said steps iv) and iii) two or more times and finally repeating said vulcanizing step vi).

2. An inflatable, flexible device (10, 10') produced in accordance with the method according to claim 1 and for use as an expandable closure device, comprising:
an inlet part (14, 14') of a substantially tubular configuration,
an expandable bag part (12, 12') integrally connected to said inlet part (14, 14') and made form a highly flexible and highly elastic material such as natural rubber, synthetic rubber, plastics, polymer or elastomer materials or combinations thereof, said expandable bag part (12, 12') being changeable from an unexpanded state to an expanded state by inflating said bag through the introduction of an inflation gas into the interior through said inlet part (14, 14'), said expandable bag part (12, 12') defining in said expanded state a sphere, said expandable bag part (12, 12') including in its unexpanded state a plurality of inwardly bent folds (16, 16') extending parallel with said inlet part (14, 14') and extending from positions juxtaposed said inlet part (14, 14') along a major part of the outer surface of said expandable bag part (12, 12'), said inwardly bent folds (16, 16') reducing the overall diameter of said expandable device in said unexpanded state by at least 30%, preferably 40%, further preferably 50%, further preferably 60% or 70%, such as 30%-35%, 35%-40%, 40%-45%, 45%- 50%, 50%-55%, 55%-60%, 60%-65%,65%-70%, as compared to the geometrical configuration defined by said expandable bag part (12, 12') when in said non-expanded state and when not including said plurality of inwardly bent folds (16, 16'), and said inlet part (14, 14') and said expandable bag part (12, 12') being made from identical materials and in a single production step, said expandable bag part (12, 12') further including a fibre or mesh reinforcing structure (50, 52, 54) included integrally in said material of said expandable bag part (12, 12') and serving the purpose of preventing said expandable bag part (12, 12') from being expanded beyond a specific maximum size determined by said reinforcing structure (50, 52, 54).

3. The inflatable, flexible device (10, 10') according to claim 2, said plurality of inwardly bent folds (16, 16') comprising 4-24 folds such as 6-18 folds, preferably 12 folds, or 4-6,6-8, 8-10, 10-12,12-14, 14-16,16-18, 18-20,20-22, 22-24 folds.

4. The inflatable, flexible device (10, 10') according to any of the claims 2-3, further comprising an outer wear-resistant coating.

5. The inflatable, flexible device (10, 10') according to any of the claims 2-4, said expandable bag part (12, 12') comprising an unfolded part (20, 20') opposite to its integral connection to said inlet part (14, 14').

6. The inflatable, flexible device (10, 10') according to any of the claims 2-5, said plurality of folds continuing to the apex (20, 20') of said expandable bag part (12, 12') opposite to its integral connection to said inlet part (14, 14').

7. The inflatable, flexible device (10, 10') according to any of the claims 2-6, said tubular configuration of said inlet part (14, 14') defining a longitudinal extension, said extension being less than a characteristic dimension of said expandable bag part (12, 12') in said expanded state being substantially identical to said characteristic dimension or being larger than said characteristic dimension.

## Patentansprüche

1. Ein Verfahren zur Herstellung einer aufblasbaren, flexiblen Vorrichtung (10, 10') zur Verwendung als ausdehnbares Absperrorgan, welche Vorrichtung folgendes umfasst:
einen Einleitungsteil (14, 14') mit einer im wesentlichen rohrförmigen Konfiguration,
einen ausdehnbaren Beutelteil (12, 12'), der einstückig mit dem besagten Einleitungsteil (14, 14') verbunden ist und aus einem hochflexiblen und hochelastischen Material wie z.B. Naturgummi, synthetischem Kautschuk, Kunststoff, polymeren oder elastomeren Materialien oder Kombinationen hiervon besteht, indem der besagte ausdehnbare Beutelteil (12, 12') sich von einem unausgedehnten zu einem ausgedehnten Zustand ändern lässt durch Aufblasen des besagten Beutels durch Einleitung eines Aufblasgases in dessen Inneres durch den besagten Einleitungsteil (14, 14') hindurch, wobei der besagte ausdehnbare Beutelteil (12, 12') in dem besagten ausgedehnten Zustand eine Sphäre bildet, indem der ausdehnbare Beutelteil (12, 12') im unausgedehnten Zustand eine Mehrheit von nach innen gebogenen Falten (16, 16') enthält, die sich parallel zu dem besagten Einleitungsteil (14, 14') erstrecken und sich von Positionen nahe dem besagten Einleitungsteil (14, 14') langs einem Grossteil der Aussenfläche des besagten ausdehnbaren Beutelteils (12, 12') erstrecken, wobei die nach innen gebogenen Falten (16, 16') den Gesamtdiameter der besagten ausdehnbaren Vorrichtung im besagten unausgedehnten Zustand mit mindestens 30%, vorzugsweise 40%, mehr vorgezogen 50%, mehr vorgezogen 60% oder 70%, wie z.B. 30%-35%, 35%-40%, 40%-45%, 45%-50%, 50%-55%, 55%-60%, 60%-65%, 65%-70% reduzieren im Vergleich zu der geometrischen Konfiguration, den der besagte ausdehnbare Beutelteil (12, 12') bildet, wenn dieser sich im besagten nicht ausgedehnten Zustand befindet und wenn er nicht die besagte Mehrheit von nach innen gebogenen Falten (16, 16') enthält, und indem der besagte Einleitungsteil (14, 14') und der besagte ausdehnbare Beutelteil (12, 12') aus identischen Materialien und in einem einzigen Arbeitsgang hergestellt werden,
welches Verfahren folgende Schritte umfasst:
i) Erstellung eines Generatorkörpers mit einer äusseren Konfiguration, die der Konfiguration der aufblasbaren, flexiblen Vorrichtung (10, 10') entspricht, wenn diese sich im unausgedehnten Zustand befindet,
ii) Aufbringung einer Trennbeschichtung (release coating) auf den besagten Generatorkörper,
iii) Einbringung des besagten Generatorkörpers mit der besagten äusseren Trennbeschichtung in ein Latexbad, indem der besagte Generatorkörper in einem Zeitraum von 1-20 Minuten, z.B. 2-10 Minuten, in dem besagten Latexbad verbleibt,
iv) Überführung des besagten Generatorkörpers mit der äusseren Latexbeschichtung in ein Latexbinderbad,
v) Wiederholung des besagten Schrittes iii) und eventuell ferner des besagten Schrittes iv) und Wiederholung des Schrittes iii),
vi) Vulkanisierung des besagten Latexmaterials durch Aussetzung des besagten Latexmaterials für eine erhöhte Temperatur in einem längeren Zeitraum, wie z.B. eine Temperatur von 65 C für 2 Stunden,
vii) Entfernung des besagten vulkanisierten Latexkörpers von dem besagten Generatorkörper,
viii) Einleitung eines Gases in den besagten Latexkörper unter erhöhtem Gasdruck zur Umwandlung des besagten Latexkörpers aus dem besagten unausgedehnten Zustand in den besagten ausgedehnten Zustand,
ix) Aufbringung einer äusseren Fiber- oder Netzverstärkungsstruktur auf den besagten Latexkörper, wenn dieser sich im ausgedehnten Zustand befindet, und Befestigung der besagten Verstärkungsstruktur auf der Aussenfläche des besagten Latexkörpers, und eventuell
x) eine einmalige oder mehrmalige Wiederholung der besagten Schritte iv) und iii) und letztlich eine Wiederholung des besagten Vulkanisierungsschrittes vi).

2. Eine aufblasbare, flexible Vorrichtung (10, 10'), hergestellt zufolge des Verfahrens gemäss Anspruch 1 und zur Verwendung als ein ausdehnbares Absperrorgan, welche Vorrichtung folgendes umfasst:
einen Einleitungsteil (14, 14') mit einer im wesentlichen rohrförmigen Konfiguration,
einen ausdehnbaren Beutelteil (12, 12'), der einstückig mit dem besagten Einleitungsteil (14, 14') verbunden ist und aus einem hochflexiblen und hochelastischen Material wie z.B. Naturgummi, synthetischem Kautschuk, Kunststoff, polymeren oder elastomeren Materialien oder Kombinationen hiervon besteht, indem der besagte ausdehnbare Beutelteil (12, 12') sich von einem unausgedehnten zu einem ausgedehnten Zustand ändern lässt durch Aufblasen des besagten Beutels durch Einleitung eines Aufblasgases in dessen Inneres durch den besagten Einleitungsteil (14, 14') hindurch, wobei der besagte ausdehnbare Beutelteil (12, 12') in dem besagten ausgedehnten Zustand eine Sphäre bildet, indem der ausdehnbare Beutelteil (12, 12') im unausgedehnten Zustand eine Mehrheit von nach innen gebogenen Falten (16, 16') enthält, die sich parallel zu dem besagten Einleitungsteil (14, 14') erstrecken und sich von Positionen nahe dem besagten Einleitungsteil (14, 14') langs einem Grossteil der Aussenfläche des besagten ausdehnbaren Beutelteils (12, 12') erstrecken, wobei die nach innen gebogenen Falten (16, 16') den Gesamtdiameter der besagten ausdehnbaren Vorrichtung im besagten unausgedehnten Zustand mit mindestens 30%, vorzugsweise 40%, mehr vorgezogen 50%, mehr vorgezogen 60% oder 70%, wie z.B. 30%-35%, 35%-40%, 40%-45%, 45%-50%, 50%-55%, 55%-60%, 60%-65%, 65%-70% reduzieren im Vergleich zu der geometrischen Konfiguration, den der besagte ausdehnbare Beutelteil (12, 12') bildet, wenn dieser sich im besagten nicht ausgedehnten Zustand befindet und wenn er nicht die besagte Mehrheit von nach innen gebogenen Falten (16, 16') enthält, und indem der besagte Einleitungsteil (14, 14') und der besagte ausdehnbare Beutelteil (12, 12') aus identischen Materialien und in einem einzigen Arbeitsgang hergestellt werden, indem der ausdehnbare Beutelteil (12, 12') ferner eine Fiber- oder Netzverstärkungsstruktur (50, 52, 54) enthält, die mit dem besagten Material des besagten ausdehnbaren Beutelteils (12, 12') integriert ist und dem Zweck dient, den besagten ausdehnbaren Beutelteil (12, 12') daran zu hindern, sich über eine spezifische maximale, von der besagten Verstärkungsstruktur (50, 52, 54) bestimmte Grösse auszudehnen.

3. Die aufblasbare, flexible Vorrichtung (10, 10') gemäss Anspruch 2, in welcher die genannte Mehrheit von nach innen gebogene Falten (16, 16') 4-24 Falten umfasst, wie z.B. 6-18 Falten, vorzugsweise 12 Falten, oder 4-6, 6-8, 8-10, 10-12, 12-14, 14-16, 16-18, 18-20, 20-22, 22-24 Falten.

4. Die aufblasbare, flexible Vorrichtung (10, 10') gemäss einem jeglichen der Ansprüche 2-3, welche Vorrichtung ferner eine äussere verschleissfeste Beschichtung umfasst.

5. Die aufblasbare, flexible Vorrichtung (10, 10') gemäss einem jeglichen der Ansprüche 2-4, in welcher der ausdehnbare Beutelteil (12, 12') gegenüber seiner einstückigen Verbindung mit dem besagten Einleitungsteil (14, 14') einen ungefalteten Teil (20, 20') umfasst.

6. Die aufblasbare, flexible Vorrichtung (10, 10') gemäss einem jeglichen der Ansprüche 2-5, in welcher sich die Mehrheit von Falten bis zur Spitze (20, 20') des besagten ausdehnbaren Beutelteils (12, 12') gegenüber dessen einstückiger Verbindung mit dem besagten Einleitungsteil (14, 14') erstreckt.

7. Die aufblasbare, flexible Vorrichtung (10, 10') gemäss einem jeglichen der Ansprüche 2-6, in welcher die besagte Konfiguration des besagten Einleitungsteils (14, 14') eine längslaufende Verlängerung bildet, indem die besagte Verlängerung kleiner als die charakteristische Dimension des besagten ausdehnbaren Beutelteils (12, 12') im besagten ausgedehnten Zustand ist, im wesentlichen identisch mit der besagten charakteristischen Dimension ist oder grösser als die besagte charakteristische Dimension ist.

## Revendications

1. Procédé de production d'un dispositif souple et gonflable (10, 10') utilisé comme dispositif de fermeture déployable, le dispositif comprenant:
une partie d'ouverture (14, 14') d'une configuration essentiellement tubulaire,
une partie de poche déployable (12, 12') intégralement liée à ladite partie d'ouverture (14, 14') et faite d'une matière extrêmement souple et extrêmement élastique tel que du caoutchouc naturel, du caoutchouc synthétique, du plastique, du polymère ou des matières élastomères ou des combinaisons de ceux-ci, ladite parte de poche déployable (12, 12') étant changeable d'un état ployé à un état déployé en gonflant ladite poche par l'introduction d'un gaz de dilatation jusqu'à l'intérieure à travers ladite partie d'ouverture (14, 14'), ladite partie de poche déployable (12, 12') définissant, dans ledit état déployé, une sphère, ladite partie de poche déployable (12, 12') comprenant dans son état ployé une pluralité de ployures pliées vers l'intérieur (16, 16') et s'étendant parallèlement à ladite partie d'ouverture (14, 14') et s'étendant à partir de positions juxtaposées ladite partie d'ouverture (14, 14') le long d'une partie majeure de ladite surface extérieure de ladite partie de poche déployable (12, 12'), lesdites ployures pliées vers l'intérieur (16, 16') réduisant le diamètre total dudit dispositif déployable dans ledit état ployé par au moins 30%, préférablement 40%, plus préférablement 50%, encore plus préférablement 60% ou 70%, tel que 30% à 35%, 30% à 40%, 40% à 45%, 45% à 50%, 50% à 55%, 55% à 60%, 60% à 65%, 65% à 70%, comme comparé à la configuration géométrique définie par ladite partie de poche déployable (12, 12') lorsqu'elle est dans l'état non-déployé et lorsqu'elle ne comprends pas ladite pluralité de ployures pliées vers l'intérieur (16, 16'), et ladite partie d'ouverture (14, 14') et ladite partie de poche déployable (12, 12') étant faites de matières identiques et en une seule étape de production,
le procédé comprenant les étapes de:
i) fournir un corps générateur ayant une configuration extérieure qui s'accorde à la configuration du dispositif souple et gonflable (10, 10') lorsqu'il est dans son état déployé,
ii) appliquer une revêtement libérable (release-coating) audit corps générateur,
iii) introduir ledit corps générateur ayant ledit revêtement libérable (release-coating) extérieur à l'intérieur d'un bain (de) latex et maintenir ledit corps générateur dans ledit bain (de) latex pendant une période de 1 à 20 minutes, tel que 2 à 10 minutes,
iv) passer ledit corps générateur ayant une couche latex extérieure à l'intérieur d'un bain de latex liant,
v) répéter ladite étape iii) et éventuellement en outre l'étape iv) et répéter ladite étape iii),
vi) vulcaniser ladite matière de latex en exposant ladite matière de latex à une température élevée pour une periode de temps tel qu'à une température de 65 C° pendant 2 heures,
vii) enlever ledit corps de latex vulcanisé dudit corps générateur,
viii) introduir un gaz à l'intérieur dudti corps de latex à une pression de gaz élevée pour convertir ledit corps de latex de ladite étape deployée à ladite étape ployée,
ix) appliquer une structure renforcante de treillis ou de fibre audit corps de latex lorsqu'il est dans ledit état déployé et fixer ladite structure renforcante à la surface extérieure dudit corps de latex et éventuellement
x) répéter lesdites étapes iv) et iii) deux ou plusieurs fois et finallement répéter ladite étape vulcanisante vi).

2. Un dispositif souple et gonflable (10, 10') produit selon le procédé selon la revendication 1 et utilisé comme dispositif de fermeture déployable, comprenant:
une partie d'ouverture (14, 14') d'une configuration essentiellement tubulaire,
une partie de poche déployable (12, 12') intégralement liée à ladite partie d'ouverture (14, 14') et faite d'une matière extrêmement souple et extrêmement élastique tel que du caoutchouc naturel, du caoutchouc synthétique, du plastique, du polymère ou des matières élastomères ou des combinaisons de ceux-ci, ladite parte de poche déployable (12, 12') étant changeable d'un état ployé à un état déployé en gonflant ladite poche par l'introduction d'un gaz de dilatation jusqu'à l'intérieure à travers ladite partie d'ouverture (14, 14'), ladite partie de poche déployable (12, 12') définissant, dans ledit état déployé, une sphère, ladite partie de poche déployable (12, 12') comprenant dans son état ployé une pluralité de ployures pliées vers l'intérieur (16, 16') et s'étendant parallèlement à ladite partie d'ouverture (14, 14') et s'étendant à partir de positions juxtaposées ladite partie d'ouverture (14, 14') le long d'une partie majeure de ladite surface extérieure de ladite partie de poche déployable (12, 12'), lesdites ployures pliées vers l'intérieur (16, 16') réduisant le diamètre total dudit dispositif déployable dans ledit état ployé par au moins 30%, préférablement 40%, plus préférablement 50%, encore plus préférablement 60% ou 70%, tel que 30% à 35%, 30% à 40%, 40% à 45%, 45% à 50%, 50% à 55%, 55% à 60%, 60% à 65%, 65% à 70%, comme comparé à la configuration géométrique définie par ladite partie de poche déployable (12, 12') lorsqu'elle est dans l'état non-déployé et lorsqu'elle ne comprends pas ladite pluralité de ployures pliées vers l'intérieur (16, 16'), et ladite partie d'ouverture (14, 14') et ladite partie de poche déployable (12, 12') étant faites de matières identiques et en une seule étape de production, ladite partie de poche déployable (12, 12') comprenant en outre une structure renforcante de treillis ou de fibre (50, 52, 54) compris intégralement dans ladite matière de ladite partie de poche déployable (12, 12') et ayant pour but d'empêcher ladite partie de poche déployable (12, 12') d'être déployée au dela d'une dimension maximale spécifique déterminée par ladite structure renforçante (50, 52, 54).

3. Le dispositif souple et gonflable (10, 10') selon la revendication 2, ladite pluralité de ployures pliée vers l'intérieur (16, 16') comprenant entre 4 et 24 ployures, tel que 6 à 18 ployures, préférablement 12 ployures, ou 4 à 6, 6 à 8, 8 à 10, 10 à 12, 12 à 14, 14 à 16, 16 à 18, 18 à 20, 20 à 22, 22 à 24 ployures.

4. Le dispositif souple et gonflable (10, 10') selon l'une quelconque des revendications 2 à 3, comprenant en outre une couche extérieure résistante à l'usure.

5. Le dispositif souple et gonflable (10, 10') selon l'une quelconque des revendications 2 à 4, ladite partie de poche déployable (12, 12') comprenant une partie non-pliée (20, 20') à l'opposé de sa connection intégrale à ladite partie d'ouverture (14, 14').

6. Le dispositif souple et gonflable (10, 10') selon l'une quelconque des revendications 2 à 5, ladite pluralité de ployures continuant jusqu'à la pointe (20, 20') de ladite partie de poche déployable (12, 12') à l'opposé de sa connection intégrale à ladite partie d'ouverture (14, 14').

7. Le dispositif souple et gonflable (10, 10') selon l'une quelconque des revendications 2 à 6, ladite configuration tubulaire de ladite partie d'ouverture (14, 14') définissant une extension longitudinale, ladite extension étant moins qu'une dimension caractérisitique de ladite partie de poche déployable (12, 12') dans ledit état déployé, et étant essentiellement identique à ladite dimension caractéristique ou étant plus large que ladite dimension caractéristique.
